# EUROPÄISCHE PATENTANMELDUNG

(11) **EP 3 900 517 A1**
(43) Veröffentlichungstag der Anmeldung: **27.10.2021**
(21) Anmeldenummer: 21167871.9
(22) Anmeldetag: 12.04.2021
(51) Int. Cl.: A01F 15/08

(54) **RUNDBALLENPRESSE UND VERFAHREN ZUM BETRIEB EINER RUNDBALLENPRESSE**

(30) Priorität: 22.04.2020 DE 102020205115
(71) Anmelder: Deere & Company, Moline, IL 61265 (US)
(72) Erfinder: GUIET, LIONEL, 68163 Mannheim (DE); HUMBERT, CLEMENT, 68163 Mannheim (DE)
(74) Vertreter: Stein, Stefan

(57) **Zusammenfassung**

Die Erfindung betrifft eine Rundballenpresse (10) mit einem Ballenpressraum (26) und einer Auswurfklappe (30), die entlang eines Weges zwischen einer Schließposition, in der die Auswurfklappe (30) den Ballenpressraum (26) verschliesst, und einer Öffnungsposition beweglich ist, in der ein Rundballen (12) aus dem Ballenpressraum (26) auswerfbar ist. Die Rundballenpresse umfasst weiter einen mit einer Steuereinheit (52) verbundenen Sensor (44, 46, 48) zur Bereitstellung einer Information über die Position der Auswurfklappe (30)entlang des Weges, und mit einem mit der Steuereinheit (52) verbundenen Aktuator (40) zum Verstellen der Auswurfklappe (30), wobei die Steuereinheit (52) betreibbar ist, den Aktuator (30) abhängig vom Signalwert des Sensors (44, 46, 48) in der Weise zu verstellen, dass sich der Aktuator (30) mit einer Geschwindigkeit bewegt, die von der jeweiligen Position der Auswurfklappe (30) abhängt. Die Steuereinheit (52) ist weiter derart betreibbar, dass das Ende einer Öffnungsbewegung der Auswurfklappe (30) schneller als die übrige Öffnungsbewegung erfolgt. Die Erfindung betrifft weiter ein Verfahren zum Betrieb einer Rundballenpresse

## Beschreibung

Die Erfindung betrifft eine Rundballenpresse gemäss dem Oberbegriff des unabhängigen Anspruchs 1 und ein Verfahren zum Betrieb einer Rundballenpresse gemäss dem Oberbegriff des unabhängigen Anspruchs 7.

Rundballenpressen finden Verwendung, um aus landwirtschaftlichem Erntegut, insbesondere halmförmigen landwirtschaftlichen Erntegut, Rundballen herzustellen. Derartige Rundballenpressen weisen einen Ballenpressraum auf, und insbesondere Pressmittel. Nach Fertigstellung des Rundballens kann dieser vor dem Ablegen mittels einer Umhüllungseinrichtung mit einem Umhüllungsmaterial, insbesondere Folie oder Netz, umwickelt werden. Im Anschluss kann eine Auswurfklappe der Rundballenpresse in eine Öffnungsposition bewegt und der umwickelte Rundballen ausgeworfen werden. Während des Auswerfens des Rundballens kann es zu einer Beschädigung des mit dem Umhüllungsmaterial umwickelten Rundballens durch die Auswurfklappe kommen, wenn die Auswurfklappe beispielsweise nicht ausreichend weit geöffnet ist.

Bekannte Vorrichtungen zur Steuereinheit der Auswurfklappe der Rundballenpresse werden eingesetzt, um die Auswurfklappe derart zu steuern, dass sie zumindest während eines Ballenbildungsvorgangs in einem Ballenpressraum der Rundballenpresse geschlossen ist und es nach Abschluss des Ballenbildungsvorgangs einem in dem Ballenpressraum gebildeten Rundballen ermöglicht, den Ballenpressraum zu verlassen bzw. aus diesem ausgestoßen zu werden, um danach beispielsweise auf dem Untergrund abgelegt und/oder vor dem Ablegen mittels der Umhüllungseinrichtung mit Umhüllungsmaterial umwickelt werden und/oder an eine weitere Einrichtung, beispielsweise eine Wickelvorrichtung, übergeben zu werden.

Die EP 1 593 299 A1 offenbart eine Rundballenpresse, bei der die Auswurfklappe der Rundballenpresse steuerbar ist. Die Rundballenpresse weist dazu einen mit einer Steuereinheit verbundenen Sensor zur Bereitstellung einer Information über die jeweilige Position der Auswurfklappe entlang eines Weges auf. Im Weiteren ist die Steuereinheit mit einem Aktuator zur Bewegung der Auswurfklappe verbunden und die Steuereinheit ist betreibbar, den Aktuator abhängig vom Signalwert des Sensors in der Weise anzusteuern, dass sich der Aktuator mit einer Geschwindigkeit bewegt, die von der jeweiligen Position der Tür abhängt. Die EP 1 593 299 A1 befasst sich allerdings nicht mit dem Auswerfen eines mit Umhüllungsmaterial umwickelten Rundballens und einer Beschädigung des Umhüllungsmaterial beim Auswerfen.

Das der Erfindung zu Grunde liegende Problem wird darin gesehen, eine Rundballenpresse bereitzustellen, bei der die Beschädigung des um den Rundballen gewickelten Umhüllungsmaterials beim Entladen verringert und/oder vermieden wird.

Ausgehend von diesem Stand der Technik ist es daher eine Aufgabe der vorliegenden Erfindung eine Rundballenpresse vorzuschlagen, welche die aus dem Stand der Technik bekannten Nachteile weitgehend vermeidet, insbesondere eine Rundballenpresse vorzuschlagen, die es ermöglicht eine Beschädigung des mit einem Umhüllungsmaterial umwickelten Rundballen beim Entladen zu verringern und/oder zu vermeiden.

Diese Aufgabe wird durch eine Rundballenpresse mit den Merkmalen des Anspruchs 1 und ein Verfahren zum Betrieb einer Rundballenpresse mit den Merkmalen des Anspruchs 7 gelöst.

Die abhängigen Ansprüche beziehen sich auf besonders vorteilhafte Ausführungsformen der Erfindung.

Erfindungsgemäß wird eine Rundballenpresse mit einem Ballenpressraum und einer Auswurfklappe vorgeschlagen, wobei die Auswurfklappe insbesondere im rückwärtigen Bereich des Ballenpressraums angeordnet ist. Die Auswurfklappe ist entlang eines Weges zwischen einer Schließposition, in der die Auswurfklappe den Ballenpressraum verschliesst, und sich insbesondere entlang der Rückseite des Ballenpressraums erstreckt, und einer Öffnungsposition beweglich, in der ein fertiggestellter Rundballen aus dem Ballenpressraum auswerfbar ist. Die Rundballenpresse umfasst weiter einen mit einer Steuereinheit verbundenen Sensor zur Bereitstellung einer Information über die Position, insbesondere jeweilige aktuelle Position, der Auswurfklappe entlang des Weges. Darüber hinaus umfasst die Rundballenpresse einen mit der Steuereinheit verbundenen Aktuator zum Verstellen, insbesondere zum Einstellen und/oder zur Bewegung, der Auswurfklappe. Die Steuereinheit ist dabei betreibbar, den Aktuator abhängig vom Signalwert des Sensors in der Weise zu verstellen, insbesondere einzustellen und/oder anzusteuern und/oder zu bewegen, dass sich der Aktuator mit einer Geschwindigkeit bewegt, die von der jeweiligen Position der Auswurfklappe abhängt. Im Weiteren ist die Steuereinheit derart betreibbar, dass das Ende einer Öffnungsbewegung der Auswurfklappe schneller als die übrige Öffnungsbewegung erfolgt, insbesondere also wenn die Auswurfklappe mit einer Öffnungsbewegung entlang des Weges in Richtung der Öffnungsposition bewegt wird. Bevorzugt kann der Aktuator mittels der Steuereinheit derart verstellbar sein, insbesondere einstellbar und/oder betreibbar sein, dass das Ende der Öffnungsbewegung der Auswurfklappe schneller als die übrige Öffnungsbewegung der Auswurfklappe erfolgt.

Die Rundballenpresse kann eine Umhüllungseinrichtung umfassen, wodurch ein fertig gepresster Rundballen mit einem Umhüllungsmaterial umwickelt und im Anschluss daran in gewickelter Form ausgeworfen werden kann. Der Rundballen wird in der Ballenpresskammer der Rundballenpresse, insbesondere einer zylindrischen Ballenpresskammer, während einer Ballenbildungsphase in Form gebracht. Dazu wird auf dem Boden liegendes Erntegut von einer Aufnahmeeinrichtung in die Ballenpresskammer gefördert. Aus dem Erntegut wird mittels eines oder mehrerer Pressmittel ein Rundballen, also ein zylindrischer Ballen, geformt. Die Ballenpresskammer kann als feste Presskammer ausgeführt sein, beispielsweise mit einem oder mehreren Pressmitteln, die als Presswalzen oder Pressrollen ausgeführt sind. Bei einer festen Presskammer können die Rotationsachsen der Pressmittel bei geschlossener Auswurfklappe auf einem Kreisbogen liegen. Mindestens eines oder aber auch zwei oder mehrere der Pressmittel können angetrieben sein. Die Ballenpresskammer kann aber auch als variable oder größenveränderliche Presskammer mit variablen Pressmitteln, beispielsweise Riemen, Gurte oder Pressketten, ausgebildet sein. Die Anordnung der Pressmittel im Ballenpressraum kann einer Zylinderform entsprechen, sodass die Pressmittel eine zylindrische Umfangsfläche ausbilden, insbesondere zylindrisch um den Rundballen angeordnet sind. Die Pressmittel können die Ballenpresskammer also umfangsseitig begrenzen. In einer der Ballenbildungsphase folgenden Einführungsphase, wird von einer Umhüllungsmaterialrolle der Umhüllungseinrichtung ein Umhüllungsmaterial in Richtung des mittlerweile ausgeformten Rundballens in die Ballenpresskammer geführt und von der Außenseite des Ballens mitgerissen. Als Umhüllungsmaterial wird, üblicherweise Netz, Folie oder Garn verwendet. Durch den sich drehenden Rundballen wird das Umhüllungsmaterial in einer Wickelphase um den Rundballen geführt. Es folgt eine Trennphase, in der das Umhüllungsmaterial durch eine Trenneinrichtung vom Rundballen getrennt wird, bevor der Rundballen in der Ballenauswurfphase ausgeworfen bzw. auf den Boden abgelegt wird.

Die Auswurfklappe kann in vertikaler Richtung zwischen der Schließposition und der Öffnungsposition beweglich sein. Die Auswurfklappe kann um eine horizontale Achse, also eine quer zu einer Vorwärtsrichtung der Rundballenpresse, insbesondere auch Fahrtrichtung, der Rundballenpresse verlaufende Achse, insbesondere eine Schwenkachse, nach oben verschwenkbar oder in anderer Weise in vertikaler Richtung bewegbar, z. B. verschiebbar sein. Die Rundballenpresse kann ein Gehäuse, das einen Gehäuseteil umfasst, und/oder einen Rahmen aufweisen. Die Auswurfklappe kann am Gehäuseteil oder Rahmen schwenkbar gelagert sein, und insbesondere um die Schwenkachse schwenkbar sein. Im Speziellen kann sich am rückwärtigen, insbesondere dem oberen Eckbereich, des Gehäuseteils oder dem rückwärtigen Rahmen ein Lager befinden, an welchem die Auswurfklappe schwenkbar gelagert sein kann. Die Pressmittel können auf dem Gehäuseteil und/oder der Auswurfklappe verteilt sein. Die Auswurfklappe kann mittels des Aktuators verstellbar, insbesondere einstellbar und/oder bewegbar und/oder schwenkbar sein, sodass beim Öffnen der Auswurfklappe eine Auswurföffnung zwischen dem Gehäuseteil und der Auswurfklappe ausbildbar ist. Die Auswurfklappe kann also im Speziellen mittels des Aktuators derart schwenkbar sein, dass die Auswurföffnung zwischen dem Gehäuseteil und der Auswurfklappe ausbildbar ist. Ausserdem kann mittels des Aktuators eine Abmessung der Auswurföffnung verstellbar, insbesondere einstellbar und/oder veränderbar sein. Die Auswurfklappe kann eine Öffnungsbewegung vollziehen, wenn sie von der Schliess- in die Öffnungsposition bewegt wird. Die Auswurfklappe kann eine Schliessbewegung vollziehen, wenn sie von der Öffnungsin die Schliessposition bewegt wird.

Der Sensor kann zur Erfassung der Position der Auswurfklappe derart ausgestaltet sein, dass er einen, mehrere oder beliebig viele Zwischenwerte der Position der Auswurfklappe bei ihrer Bewegung entlang ihres Wegs zwischen der Öffnungs- und Schließposition erfasst, und insbesondere signalisieren kann. Man kann somit nicht nur eine binäre, sondern eine im Informationsgehalt darüber hinaus gehende, genauere Information über die Position der Auswurfklappe erhalten. Der Sensor kann mit der Steuereinheit verbunden sein, die den Aktuator steuert, der zur Verstellung der Position der Auswurfklappe eingerichtet ist. Die Steuereinheit kann den Aktuator abhängig vom Signalwert des Sensors kontrollieren. Dadurch besteht unter anderem die Möglichkeit, den Aktuator mit einer Geschwindigkeit bewegen zu lassen, die von der jeweiligen Position der Auswurfklappe abhängt. Die Steuereinheit kann die zugehörige Geschwindigkeit aus Tabellen entnehmen, in der die Geschwindigkeiten abhängig von der Position der Auswurfklappe abgespeichert sein können. Diese Tabellen können vorzugsweise mit einer hinreichend hohen Auflösung versehen sein. Beim Schließen der Auswurfklappe kann die Steuereinheit anhand des Signalwerts des Sensors feststellen, ob die Auswurfklappe korrekt geschlossen wurde. Ist das nicht der Fall, weil beispielsweise ein Rundballen sich zwischen der Auswurfklappe und der Rundballenpresse verklemmt hat, kann dem Bediener eine entsprechende Information gegeben werden. Im Speziellen kann die Steuereinheit beim Schließen der Auswurfklappe ein Störungssignal abgeben, falls das Signalwert des Sensors darauf hinweist, dass die Auswurfklappe nicht in die Schließposition gelangt. Die Steuereinheit kann betreibbar sein, die Auswurfklappe basierend auf dem Signalwert des Sensors, insbesondere in Abhängigkeit vom Signalwert des Sensors, in eine von einer bekannten Größe des Ballens abhängige Öffnungsposition zu verbringen. Bei kleineren Rundballen, die beispielsweise aus Silage hergestellt sind, kann dadurch unnötiger Zeitverlust durch das Öffnen der Auswurfklappe vermieden werden. Der Sensor kann den Abstand zwischen einem Bereich der Auswurfklappe und einem sich nicht mit der Auswurfklappe bewegenden Bereich der Rundballenpresse erfassen. Der Sensor kann aber auch eingerichtet sein, den Abstand zwischen einem Bereich der Auswurfklappe und dem Erdboden zu erfassen. Dazu kann der Sensor als ein berührungslos arbeitender Entfernungssensor ausgebildet sein, z. B. ein Ultraschall- oder Laserentfernungsmesser. Der Sensor kann aber auch als ein Potentiometer und/oder ein Näherungssensor ausgebildet sein. Der Sensor kann als Winkelsensor ausgebildet sein und den Drehwinkel der Auswurfklappe um die Achse, insbesondere die Schwenkachse erfassen, um welche sich die Auswurfklappe zwischen der Öffnungs- und Schließposition bewegt. Im Speziellen kann der Sensor eingerichtet sein, die Position eines zu Verstellung der Auswurfklappe zwischen der Schließposition und der Öffnungsposition eingerichteten Aktuators zu erfassen. Der Sensor kann im Gehäuse des Aktuators angeordnet sein, bevorzugt kann der Sensor im Gehäuse des Aktuators angeordnete Elemente umfassen, die alle oder zum Teil im Aktuator angeordnet sind, wie ein Dreh- oder Schiebe-Potentiometer oder ein Permanentmagnet, dessen Position durch einen geeigneten Sensor außerhalb des Gehäuses erfasst wird.
Der Sensor kann auch ausgebildet sein und/oder eine Einrichtung umfassen, die dem Aktuator zugeführte oder von ihm abfließende Fremdkraftbetätigungsmittel erfassen, z. B. ein Hydraulikfluid, das einem hydraulisch ausgeführten Aktuator zugeführt wird oder von ihm abfließt, und daraus eine Information über dessen Position abzuleiten. Bei einem als Schrittmotor ausgeführten Aktuator kann die Anzahl der zugeführten Impulse erfasst werden. Ebenso kann der Sensor eine Lichtschranke umfassen, die mit einem Lochelement, insbesondere Kodierscheibe, zusammenwirken kann. Hier sind an sich bekannte Mittel zur Feststellung der Bewegungsrichtung vorzusehen, z. B. Schalter oder eine geeignete Form des Lochelements. Derartige Lichtschranken können als sogenannte smarte Lagerungen ausgeführt sein, insbesondere innerhalb eines Lagers der Auswurfklappe angeordnet sein. Es kann auch sein, dass dem Weg der Auswurfklappe zwei oder mehrere Sensoren zugeordnet sind, die beispielsweise jeweils ansprechen, wenn sich ein Element der Auswurfklappe in ihrer Nähe befindet. Eine relativ kostengünstige Möglichkeit kann sein, eine Anzahl von Sensoren entlang des Wegs der Auswurfklappe zu verteilen. Sie werden durch ein Element der Auswurfklappe angesteuert, wenn es sich in ihrer Nähe befindet. Es können beispielsweise mechanische Schalter (z. B. Mikroschalter) oder induktive Näherungsschalter verwendet werden. Der Sensor kann aber auch ein Dehnungssensor zur Erfassung der Position der Auswurfklappe sein. Da eine geschlossene Auswurfklappe in der Regel weniger verformt ist als eine geöffnete Auswurfklappe, kann die Verformung der Auswurfklappe mittels des Dehnungssensors, der beispielsweise ein Dehnungsmessstreifen sein kann, erfasst werden. Der Sensor kann analog und/oder digital arbeiten, d.h. der Sensor kann digitale und/oder analoge Ausgangssignale abgeben; letztere können vorzugsweise digitalisiert werden, um sie mit einer digitalen Steuereinheit verarbeiten zu können. Zwischen der Auswurfklappe und dem Sensor kann ein Übersetzungsgetriebe angeordnet sein, beispielsweise ein Hebelgetriebe. Die Rundballenpresse kann auch zwei oder mehrere Sensoren umfassen, insbesondere einen ersten und zweiten Sensor. Die zwei Sensoren können insbesondere jeweils einer von zwei gegenüberliegenden Seiten der Auswurfklappe zugeordnet sein. Die zwei oder mehrere Sensoren können mit der Steuereinheit verbunden sein, die betreibbar sein kann, Unterschiede in den Positionen der beiden Seiten der Auswurfklappe zu erfassen. Die Steuereinheit kann auch betreibbar sein, anhand der Unterschiede in den Positionen der beiden Seiten der Auswurfklappe eine Information über die Form des Ballens, beispielsweise den Durchmesser, zu bestimmen, insbesondere auf der jeweiligen Seite des jeweiligen Ballens. Die Sensoren auf beiden Seiten der Auswurfklappe können jedoch beispielsweise auf Grund der Bereitstellung von Redundanz auch ohne Bestimmung der Form des Ballens sinnvoll sein.

Wesentlich für die Erfindung ist, dass die Steuereinheit derart betreibbar ist, dass das Ende einer Öffnungsbewegung der Auswurfklappe schneller als die übrige Öffnungsbewegung erfolgt. Die Steuereinheit kann also betreibbar sein, dass die Geschwindigkeit des Aktuators am Ende der Öffnungsbewegung der Auswurfklappe grösser als die Geschwindigkeit des Aktuators während der übrigen Öffnungsbewegung der Auswurfklappe sein kann. Die Steuereinheit kann also betreibbar sein, dass der Aktuator am Ende der Öffnungsbewegung der Auswurfklappe beschleunigt wird. Hierzu kann die Geschwindigkeit des Aktuators erhöht werden, insbesondere von einer ersten auf eine zweite Geschwindigkeit. Die Erhöhung der Geschwindigkeit des Aktuators kann insbesondere während des zweiten Teils seines Hubes, also des zweiten Teils der Öffnungsbewegung der Auswurfklappe erfolgen. Der zweite Teil der Öffnungsbewegung oder die Erhöhung von der ersten auf die zweite Geschwindigkeit kann das Ende der Öffnungsbewegung sein. Mit anderen Worten, der Aktuator kann mittels der Steuereinheit derart verstellbar, insbesondere einstellbar und/oder betreibbar sein, das die Geschwindigkeit des Aktuators, insbesondere während der Öffnungsbewegung, abhängig vom Signalwert des Sensors in der Weise einstellbar ist, dass sich der Aktuator mit einer ersten Geschwindigkeit bewegt oder bewegbar ist, wenn der Signalwert unterhalb eines vorgebbaren Positionsschwellwerts liegt, und sich der Aktuator mit einer zweiten Geschwindigkeit (Aktuatorgeschwindigkeit) bewegt oder bewegbar ist, wenn der Signalwert gleich oder oberhalb des vorgebbaren Positionsschwellwerts liegt. Wobei die erste Aktuatorgeschwindigkeit kleiner als die zweite Aktuatorgeschwindigkeit sein kann. Die beschleunigte oder schnellere Öffnung der Auswurfklappe am Ende der Öffnungsbewegung, insbesondere im zweite Teil der Öffnungsbewegung und/oder die Erhöhung von der ersten auf die zweite Geschwindigkeit, unterbindet vorteilhafterweise den Kontakt zwischen dem Rundballen und der Auswurfklappe, bevorzugt einer Rolle oder eines Gurtes, besonders bevorzugt der untersten bzw. letzten Rolle der Auswurfklappe, sodass eine Beschädigung und/oder ein Abriss des Umhüllungsmaterials vermieden wird. Von Vorteil ist dies insbesondere, wenn der Rundballen mit einem leicht zu beschädigenden bzw. "zerbrechlichen" Umhüllungsmaterial wie Folie oder Netz umwickelt ist und der Rundballen ausgeworfen wird. Im Speziellen ermöglicht die Erhöhung der Geschwindigkeit der Auswurfklappe es, während des Entladevorgangs, einen ausreichend großen Abstand zwischen Auswurfklappe und Rundballen einzuhalten, um jegliche Beschädigung des Umhüllungsmaterial und/oder Störung des Entladevorgangs zu vermeiden.

In Ausgestaltung der Erfindung ist eine Beschleunigungseinrichtung zur Beschleunigung der Bewegung des Aktuators vorgesehen. Dabei ist die Steuereinheit mit der Beschleunigungseinrichtung verbunden und die Beschleunigungseinrichtung ist mittels der Steuereinheit derart verstellbar, insbesondere einstellbar und/oder betreibbar, dass die Beschleunigungseinrichtung den Aktuator am Ende der Öffnungsbewegung der Auswurfklappe in Abhängigkeit vom Signalwert des Sensors beschleunigt, insbesondere wenn der Signalwert gleich oder oberhalb eines vorgebbaren Positionsschwellwerts liegt. Die Beschleunigungseinrichtung kann einen Speicher umfassen, bevorzugt einen Speicher für ein Fluid, beispielsweise Hydraulikfluid, im speziellen ein Hydrauliköl. Der Speicher kann aber auch eine Gasflasche oder einen Gas-Druckspeicher oder einen Luftbehälter oder einen Druckluftbehälter oder einen (Flüssigkeits-)Behälter sein. Die Beschleunigungseinrichtung kann den Aktuator beschleunigen, indem der Speicher entleert, insbesondere schnell entleert wird, sodass der Aktuator mittels des zusätzlichen Fluids aus dem Speicher mit einer schnelleren Geschwindigkeit bewegt wird. Die Beschleunigungseinrichtung kann aber auch einen Elektromotor umfassen, insbesondere einen Schrittmotor, dessen Geschwindigkeit erhöht wird, sodass der Aktuator beschleunigt wird. Mit anderen Worten, die Beschleunigungseinrichtung kann mittels der Steuereinheit derart verstellbar, insbesondere einstellbar und/oder betreibbar sein, dass die Geschwindigkeit des Aktuators abhängig vom Signalwert des Sensors in der Weise einstellbar ist, dass sich der Aktuator mit einer ersten Geschwindigkeit bewegt oder bewegbar ist, wenn der Signalwert unterhalb eines vorgebbaren Positionsschwellwerts liegt, und der Aktuator mittels der Beschleunigungseinrichtung mit einer zweiten Geschwindigkeit bewegt oder bewegbar ist, wenn der Signalwert gleich oder oberhalb des vorgebbaren Positionsschwellwerts liegt. Vorteilhafterweise kann die Auswurfklappe mittels der Beschleunigungseinrichtung auf einfache Art und Weise beschleunigt werden.

Ausserdem kann mittels der Beschleunigungseinrichtung die Beschleunigung der Auswurfklappe mit konstruktiv einfachen Mitteln erreicht werden. Darüber hinaus kann aufgrund der schnelleren Öffnungsbewegung vorteilhafterweise der Kontakt zwischen dem Rundballen und der Auswurfklappe vermieden werden.

In Ausgestaltung der Erfindung umfasst die Rundballenpresse eine erste und einer zweiten Druckleitung. Mittel der ersten und zweiten Druckleitung ist der Aktuator selektiv mit Druck beaufschlagbar. Die Beschleunigungseinrichtung umfasst einen Speicher und ein Beschleunigerventil. Das Beschleunigerventil weist wenigstens einen Durchflussweg, der insbesondere in beide Richtungen durchströmt werden kann, und ein Rückschlagventil auf. Das Beschleunigerventil ist mit der zweiten Druckleitung wirksam verbunden. Ebenso kann der Speicher mit der zweiten Druckleitung wirksam verbunden sein. Das Beschleunigerventil kann entlang mit der zweiten Druckleitung dem Speicher nachgeordnet und dem Aktuator vorgeordnet angeordnet sein. Das Beschleunigerventil kann zwischen dem Speicher und dem Aktuator angeordnet sein. Das Beschleunigerventil und der Speicher können also in Reihe entlang der zweiten Druckleitung angeordnet sein. Ausserdem kann ein Blendenventil parallel zum Beschleunigerventil mit der zweiten Druckleitung wirksam verbunden sein. Der Speicher und das Beschleunigerventil können aber auch parallel zur zweiten Druckleitung angeordnet und mit der zweiten Druckleitung wirksam verbunden sein. Dann kann dem Speicher vorgeordnet ein weiteres Rückschlagventil, insbesondere ein federbelastetes Rückschlagventil, vorgesehen sein. Das Beschleunigerventil kann ein Ventil mit zwei Schaltstellungen und zwei Anschlüssen, insbesondere also ein 2/2 Wegeventil sein. Eine erste Schaltstellung des Ventils umfasst einen Durchflussweg, der in bei Richtungen durchströmbar ist. Das Beschleunigerventil kann mittels einer Feder rückstellbar sein und/oder eine elektrische Betätigung umfassen. Die elektrische Betätigung kann beispielsweise mittels einer magnetischen Spule betätigbar sein. Der Aktuator kann mittels der ersten und zweiten Druckleitung selektiv mit Druck beaufschlagbar sein. Der Aktuator kann mittels der Steuereinheit dabei derart betreibbar sein, dass die Auswurfklappe in wenigstens einem manuellen und einem automatischen Modus betreibbar ist, und dabei insbesondere mittels der ersten und zweiten Druckleitung selektiv mit Druck beaufschlagbar ist. Vorteilhafterweisen kann mittels des Beschleunigerventils und des Speichers die Beschleunigung der Auswurfklappe mit konstruktiv einfachen Mitteln und/oder auf einfache Art und Weise erreicht werden. Von Vorteil ist auch, dass das Beschleunigerventil und der Speicher auf einfache Art und Weise in bestehenden Druckleitungen nachgerüstet werden kann.

In Ausgestaltung der Erfindung sind die Druckleitungen, insbesondere die erste und zweite Druckleitung, derart ausgebildet sind, dass sie direkt oder indirekt an ein Steuerventil eines Zugfahrzeugs anschließbar sind. Das Steuerventil kann vorzugsweise derart mit einer Druckquelle in Verbindung stehen, dass es entweder die erste Druckleitung oder die zweite Druckleitung mit Druck beaufschlagen oder eine Sperrstellung einnehmen kann, in der keine der Druckleitungen mit Druck beaufschlagt wird. Auf diese Weise kann die Rundballenpresse über ein zumindest weitestgehend konventionelles Steuerventil, wie es häufig an Zugfahrzeugen, wie beispielsweise Traktoren Schleppern, vorgesehen ist, angesteuert werden. Bei der Druckquelle kann es sich um eine eigenständige, von der Rundballenpresse unabhängige Druckquelle oder eine an bzw. mit der Rundballenpresse zusammenwirkende Druckquelle handeln. Besonders günstig ist es aber, wenn die Druckquelle an dem Zugfahrzeug vorgesehen ist bzw. durch eine Druckquelle des Zugfahrzeugs gebildet wird.

In Ausgestaltung der Erfindung ist der Aktuator als ein Hydraulikmotor, insbesondere als ein Hydraulikzylinder, ausgebildet ist. Der Hydraulikmotor umfasst einen Zylinder und einen in dem Zylinder angeordneten Kolben. Der Kolben ist im Zylinder durch Beaufschlagung mit Druck in eine bezogen auf den Zylinder eingefahrene und eine bezogen auf den Zylinder ausgefahrene Stellung bringbar. Ist der Aktuator als ein Hydraulikmotor ausgebildet, so kann der Kolben über die erste und zweite Druckleitung entsprechend mit Druck beaufschlagt werden, sodass der Aktuator die Auswurfklappe bewegen bzw. in ihre Schliess- und Öffnungsposition bringen kann. Insbesondere wirkt der Aktuator derart mit der Auswurfklappe zusammen, dass er diese mit Bezug auf die Rundballenpresse bzw. einen Rahmen oder ein Gehäuseteil der Rundballenpresse um eine vorzugsweise horizontal ausgerichtet Schwenkachse verschwenkt.

In Ausgestaltung der Erfindung ist das Beschleunigerventil mittels der Steuereinheit ansteuerbar, insbesondere direkt oder indirekt ansteuerbar.

Die Erfindung betrifft weiter ein Verfahren zum Betrieb einer Rundballenpresse mit einem Ballenpressraum, insbesondere einer Rundballenpresse nach einem der Ansprüche 1 bis 6. Die Rundballenpresse umfasst einen Ballenpressraum und eine, insbesondere im rückwärtigen Bereich des Ballenpressraums angeordnete, Auswurfklappe, die entlang eines Weges zwischen einer Schließposition, in der die Auswurfklappe den Ballenpressraum verschliesst, und einer Öffnungsposition bewegt wird, in der ein fertiggestellter Rundballen aus dem Ballenpressraum ausgeworfen wird. Die Rundballenpresse weist weiter einen mit einer Steuereinheit verbundenen Sensor zur Bereitstellung einer Information über die Position der Auswurfklappe entlang des Weges auf. Die Rundballenpresse umfasst ausserdem einen mit der Steuereinheit verbundenen Aktuator zum Verstellen der Auswurfklappe, wobei die Steuereinheit derart betrieben wird, dass der Aktuator abhängig vom Signalwert des Sensors derart verstellt wird, dass der Aktuator mit einer Geschwindigkeit bewegt wird, die von der jeweiligen Position der Auswurfklappe abhängt. Die Steuereinheit wird weiter derart betrieben, dass das Ende einer Öffnungsbewegung der Auswurfklappe schneller als die übrige Öffnungsbewegung erfolgt. Das erfindungsgemässe Verfahren weist die oben beschriebenen Vorteile der erfindungsgemässen Rundballenpresse auf. Im Weiteren kann die erfindungsgemässe Rundballenpresse bei der Durchführung des erfindungsgemässen Verfahrens verwendet werden.

Die erfindungsgemässe Rundballenpresse umfasst eine Steuereinheit. Das erfindungsgemässe Verfahren kann mit der Steuereinheit durchführbar sein. Die Steuereinheit kann ein elektronisches Modul und/oder ein eingebettetes System sein Die Steuereinheit kann ein Speichermodul und/oder einen Prozessor umfassen. Die Steuereinheit kann mit dem einen oder mehreren Sensoren und/oder dem Aktuator und/oder der Beschleunigungseinrichtung und/oder dem Speicher und/oder dem Beschleunigerventil und/oder dem Steuerventil und/oder weiteren Sensoren signalverbunden sein, also datenleitend verbunden sein. Die Verbindung kann kabelgebunden oder kabellos, also per Funk, realisiert sein. Der Kommunikationsbus kann beispielsweise Isobus, CAN-Bus oder ähnliches sein kann. Die Steuereinheit und/oder weitere Steuereinheit (engl. ECU = electronic control unit oder ECM = electronic control module) kann ein elektronisches Modul und/oder ein eingebettetes System sein. Die Steuereinheit kann an der Rundballenpresse oder an einem Zugfahrzeug, durch welches die Rundballenpresse ziehbar ist, vorgesehen sein. Die Steuereinheit kann auch auf die Rundballenpresse und das Zugfahrzeug verteilt sein. Im Speziellen können auch zwei Steuereinheiten, eine erste für das Zugfahrzeug und eine zweite für die Rundballenpresse vorgesehen sein. Ausserdem können der eine oder mehrere Sensoren und/oder der Aktuator und/oder die Beschleunigungseinrichtung und/oder der Speicher und/oder das Beschleunigerventil und/oder das Steuerventil und/oder weitere Sensoren mittels der Steuereinheit verstellbar, insbesondere einstellbar sein oder eingestellt werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung einer erfindungsgemässen Rundballenpresse mit einem Zugfahrzeug, und
- Fig. 2: eine detailliertere schematische Darstellung der erfindungsgemässen Rundballenpresse gemäss Figur 1, und
- Fig. 3: einen ersten schematischen Hydraulikplan zur Steuerung der Auswurfklappe der erfindungsgemässen Rundballenpresse, und
- Fig. 4: einen zweiten schematischen Hydraulikplan zur Steuerung der Auswurfklappe der erfindungsgemässen Rundballenpresse.

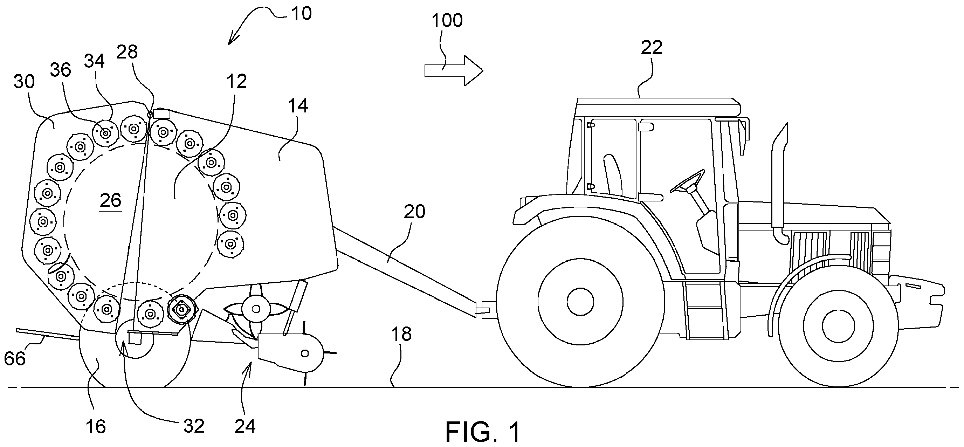

Figur 1 zeigt eine schematische Darstellung der erfindungsgemässen Rundballenpresse 10 zum Pressen eines rundzylindrischen Ballens, insbesondere eines Rundballens 12, und ein Zugfahrzeug 22. Die Rundballenpresse 10 kann, wie gezeigt, ein Gehäuseteil 14 aufweisen. Ausserdem stützt sich die Rundballenpresse 10, insbesondere das Gehäuseteil 14, mittels Rädern 16 auf einem Untergrund 18 ab. Die Rundballenpresse 10 kann aber auch einen Rahmen mit oder anstatt des Gehäuseteils 14 aufweisen, der sich auf Rädern 16 abstützt. Darüber hinaus kann die Rundballenpresse 10, insbesondere das Gehäuseteil 14 oder der Rahmen, mittels einer Deichsel 20 an das Zugfahrzeug 22, z. B. einen Schlepper oder Traktor, anschließbar sein. Die Rundballenpresse 10 ist mittels des Zugfahrzeugs 22 über ein Feld ziehbar. Die Deichsel 20 kann an der Vorderseite des Gehäuseteiles 14 oder des Rahmens angeordnet sein.
An einer bezogen auf eine Vorwärtsrichtung 100 vorderen, unteren Seite der Rundballenpresse 10, insbesondere des Gehäuseteils 14, befindet sich in bekannter Weise eine Aufnahmevorrichtung 24, beispielsweise eine Pick-Up 110, zur Aufnahme von auf dem Boden liegenden Erntegut, z. B. in einem Schwad abgelegten Heu oder Stroh.

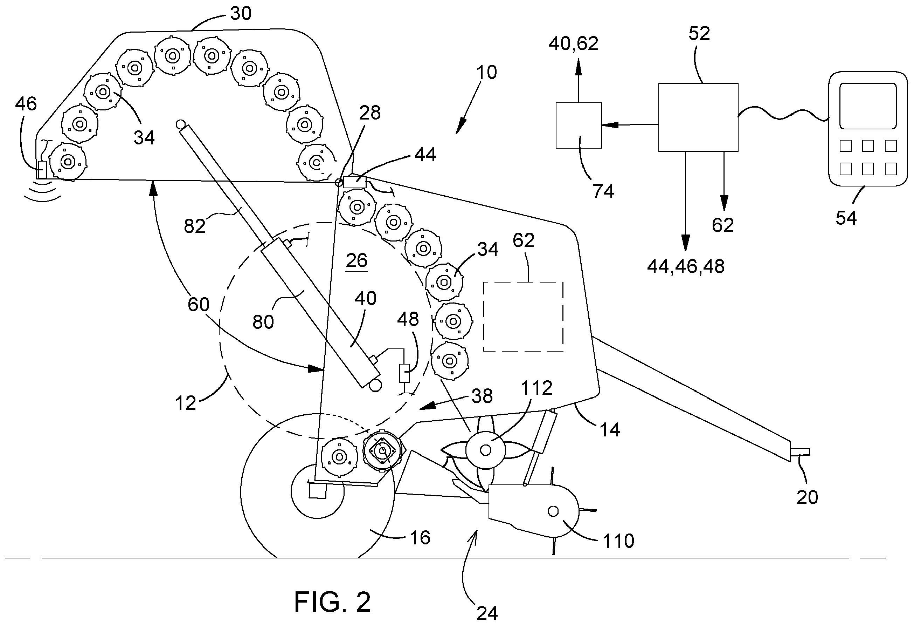

Das von der Aufnahmevorrichtung 24 aufgenommene Erntegut kann durch einen Förderrotor (siehe Figur 2, Bezugszeichen 112) einem Einlass (siehe Figur 2, Bezugszeichen 38) eines Ballenpressraums 26 zugeführt werden. Im Ballenpressraum 26 kann das Erntegut zu einem Rundballen 12 aufgerollt, gebunden und anschließend auf den Boden abgelegt oder an eine Umhüllungseinrichtung (nicht gezeigt) überführt werden.

Das Gehäuseteil 14 kann einen vorderen Teil des Ballenpressraum 26 umgeben. Im rückwärtigen Bereich des Ballenpressraums 26 ist eine Auswurfklappe 30 angeordnet, die entlang eines Weges zwischen einer Schließposition, in der die Auswurfklappe 30 den Ballenpressraum 26 verschliesst, und einer Öffnungsposition beweglich ist, in der ein fertiggestellter Rundballen 12 aus dem Ballenpressraum 26 auswerfbar ist. Die Auswurfklappe 30 kann um eine horizontal und quer zur Vorwärtsrichtung 100 verlaufende Achse 28 an der Oberseite der Rundballenpresse verschwenkbar angelenkt sein. Im Speziellen kann sich an dem rückwärtigen oberen Eckbereich des Gehäuseteils 14 ein Lager für eine schwenkbare Auswurfklappe 30 befinden, die beispielsweise aus einem weiteren Gehäuseteil gebildet werden kann. Die Auswurfklappe 30 kann einen hinteren Teil des Ballenpressraums 26 umgeben. Die Auswurfklappe 30 kann im geöffneten Zustand, insbesondere in der Öffnungsposition, eine Öffnung 32 freigeben, durch welche der von der Rundballenpresse 10 gepresste Ballen 12 abgesetzt bzw. entladen oder ausgeworfen werden kann. Nachdem der Rundballen 12 den Ballenpressraum 26 verlassen hat, kann die Auswurfklappe 30 (wieder) geschlossen werden, was beispielsweise durch einen oder mehrere nicht gezeigte Druck- oder Auflagesensoren ermittelt werden kann, die beispielsweise an einer Entladerampe 66 angeordnet sind.

Gemäß dem vorliegenden Ausführungsbeispiel wird der Ballenpressraum 26 von Pressmitteln, von denen insbesondere wenigstens einige antreibbar sind, umschlossen. Der Ballenpressraum 26 der Rundballenpresse 10 ist also größenunveränderlich ausgebildet. Die Pressmittel sind als eine Vielzahl zueinander parallel verlaufender Pressrollen 34 ausgebildet (exemplarisch wurden hier nur einige wenige Pressrollen 34 mit dem Bezugszeichen 34 versehen), deren Rollachsen 36 bei geschlossener Auswurfklappe 30 auf einem Kreisbogen gelegen sind. Die Pressrollen 34 dienen, neben einem Pressen und einer Formgebung, insbesondere auch einer Rotationserzeugung oder einer Rotationserhaltung des in dem Ballenpressraum 26 angeordneten Rundballens 12. Es könnte sich bei der Rundballenpresse 10 aber genauso gut um eine Rundballenpresse 10 mit variablem Presskammervolumen handeln, dann würde der Ballenpressraum 26 von antreibbaren Riemen oder dgl. umschlossen.

Die Rundballenpresse 10 umfasst ausserdem mindestens einen mit einer Steuereinheit 52 verbundenen Sensor (siehe Figur 2, Bezugszeichen 44, 46, 48) zur Bereitstellung einer Information über die Position der Auswurfklappe 30 entlang des Weges, und mit einem mit der Steuereinheit 52 verbundenen Aktuator 40 zum Verstellen der Auswurfklappe 30, wobei die Steuereinheit 52 betreibbar ist, den Aktuator 40 abhängig vom Signalwert des Sensors 44, 46, 48 in der Weise zu verstellen, dass sich der Aktuator 40 mit einer Geschwindigkeit bewegt, die von der jeweiligen Position der Auswurfklappe 30 abhängt. Erfindungsgemäss ist die Steuereinheit 52 derart betreibbar ist, dass das Ende einer Öffnungsbewegung der Auswurfklappe 30 schneller als die übrige Öffnungsbewegung erfolgt.

Figur 2 zeigt eine detailliertere schematische Darstellung der erfindungsgemässen Rundballenpresse 10 gemäss Figur 1 und entspricht im Wesentlichen der in Figur 1 gezeigten Rundballenpresse 10. Im Folgenden wird deshalb lediglich auf in Figur 1 nicht gezeigte Details gegebenenfalls auch Unterschiede eingegangen.

Die Auswurfklappe 30 ist in Figur 2 in ihrer Öffnungsposition dargestellt. Sie kann durch den Aktuator 40 zwischen der dargestellten Öffnungsposition und einer Schließposition bewegt werden, in der sie den Ballenpressraum 26 nach hinten verschließt. Sie wird dazu in der Figur um die Achse 28 gedreht.

Die Rundballenpresse 10 kann einen, zwei oder mehrere Sensoren 44, 46, 48 zur Bereitstellung einer Information über die Position der Auswurfklappe 30 entlang des Weges umfassen. Der oder die Sensoren sind mit einer Steuereinheit (46) verbunden. Der Sensor 44, 46, 48, insbesondere ein erster Sensor 48, kann die Position des zur Verstellung der Auswurfklappe 30 zwischen der Schliessposition und der Öffnungsposition eingerichteten Aktuators 30 erfassen. Ein zweiter Sensor 44, beispielsweise ein Drehpotentiometers, kann den Drehwinkel der Auswurfklappe 30 um die Achse 28 erfassen, insbesondere an der in Vorwärtsrichtung rechten Seite der Rundballenpresse 10. Ein weiterer derartiger Sensor (nicht dargestellt), beispielsweise ein Drehpotentiometers, kann den Drehwinkel 40 der Auswurfklappe 30 um die Achse 28 an der in Vorwärtsrichtung linken Seite der Rundballenpresse 10. Ein Sensor 46, der insbesondere auch als ein dritter Sensor 46 vorgesehen sein kann, kann beispielsweise in Form eines Ultraschallentfernungsmessers ausgebildet sein, der den Abstand zwischen dem rückwärtigen (in der Schließposition unteren) Ende der Auswurfklappe 26 und dem Erdboden erfassen kann. Der Sensor 46 kann vorzugsweise auf einem Laufzeitprinzip beruhen. Er könnte auch mit einem als Referenz dienenden Reflektor zusammenwirken, der an einem sich nicht mit der Auswurfklappe 30 bewegenden Element der Rundballenpresse 10 befestigt ist, z. B. an der Achse oder am rückwärtigen Ende des Ballenpressraums 26. Die Rundballenpresse kann einen als ersten Sensor 48 und/oder einen als zweiten Sensor 44 und/oder einen als dritten Sensor 46 ausgebildeten Sensor 44, 46, 48 umfassen, also mindestens einen der Sensoren, aber auch zwei, drei oder mehrere der Sensoren. Die Verwendung mehrerer Sensoren 44, 46, 48 hat den Vorteil, dass diese eine Redundanz für den Fall darstellt, dass einer der Sensoren 44, 46, 48 ausfällt, bereit, und ermöglichen auch eine gegenseitige Funktionskontrolle.

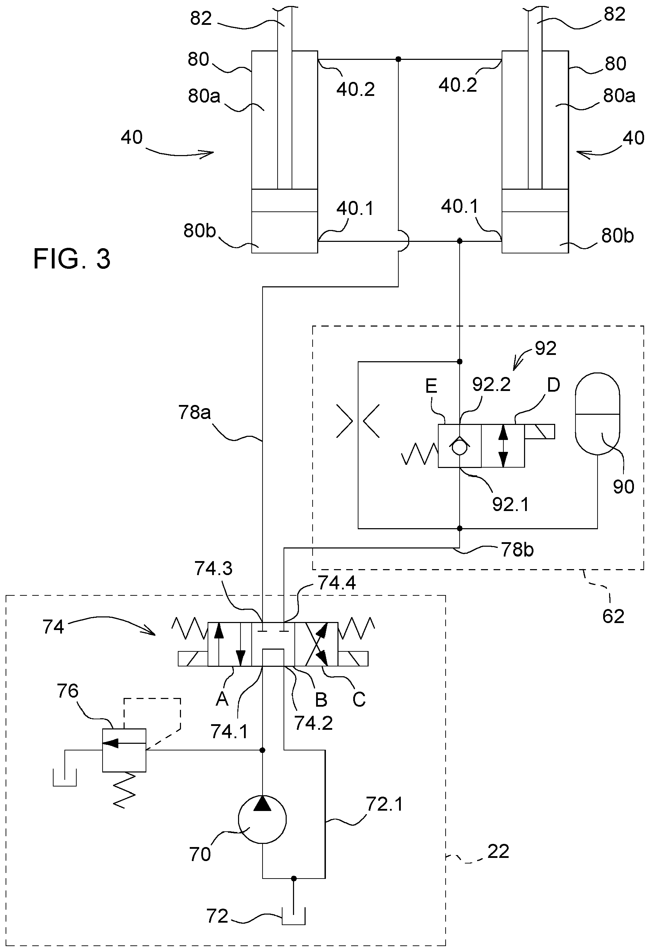

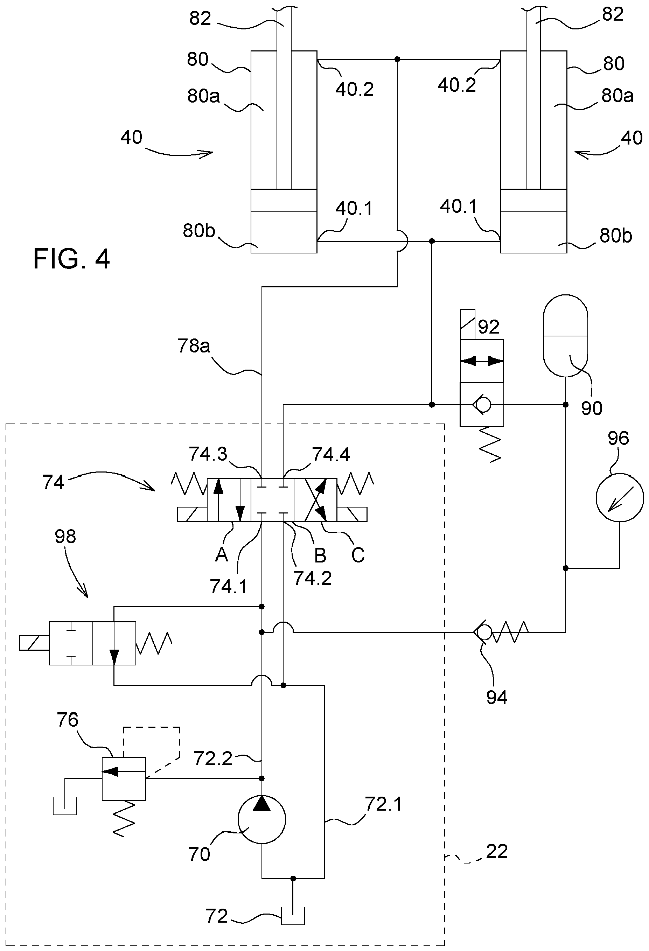

Zur Betätigung der Auswurfklappe 30, insbesondere schwenkbaren Auswurfklappe 30, ist an der Ballenpresse der Aktuator 40 vorgesehen, einen ersten Anschluss (siehe Figur 3 und 4, Bezugszeichen 40.1) und einen zweiten Anschluss (siehe Figur 3 und 4, Bezugszeichen 40.2) aufweisen kann. Der Aktuator 40 kann als ein Hydraulikmotor, insbesondere als ein Hydraulikzylinder ausgebildet sein. Der Aktuator 40 kann dann jeweils einen Zylinder (siehe Figur 3 und 4, Bezugszeichen 80) und einen in dem Zylinder 80 verschiebbaren Kolben (siehe Figur 3 und 4, Bezugszeichen 82) aufweisen, wobei der Kolben 82 den Zylinder 80 in zwei Kammern, also einen ersten und einen zweiten Zylinderbereich (siehe Figur 3 und 4, Bezugszeichen 80a, 80b) unterteilt. Der Kolben 82 ist durch Beaufschlagung mit Druck in eine bezogen auf den Zylinder 80 eingefahrene und eine bezogen auf den Zylinder 80 ausgefahrene Stellung bringbar. Der Kolben 82 kann entweder durch Beaufschlagung des ersten Zylinderbereichs 80a mit Druck in eine eingefahren und durch Beaufschlagung des zweiten Zylinderbereichs 80b mit Druck in eine ausgefahrene Stellung gebracht werden. Der Aktuator 40 ist zylinderseitig am Gehäuseteil 14 und/oder Rahmen und kolbenseitig an der Auswurfklappe 30 angelenkt, was aber auch umgekehrt sein kann. In der zum ersten Zylinderbereich 80a des Aktuators 30 führenden Leitung ist der erste Sensor 48, beispielsweise in Form eines Flusssensors, angeordnet. Anhand der Menge des in den ersten Zylinderbereich 80a fließenden oder daraus abfließenden Hydraulikfluids kann eine Information über die Position des Kolbens 82 des Aktuators 30 und somit über die Position der Auswurfklappe 30 gewonnen werden.

Der oder die Sensoren 44, 46, 48 sind mit der Steuereinheit 52 verbunden, vorzugsweise über einen Bus oder direkt über elektrische Kabel bzw. Lichtleiter. Die Steuereinheit 52 kann sich physisch auf der Rundballenpresse 10 oder an Bord des Zugfahrzeugs 22 befinden, das die Rundballenpresse 10 zieht und ihre beweglichen Elemente mit elektrischer und/oder mechanischer und/oder hydraulischer Antriebsleistung versorgt. Die Steuereinheit 52 kann ein Steuerventil 74 kontrollieren. Ausserdem umfasst die Rundballenpresse 10 eine erste und eine zweite Druckleitung 78a, 78b, die mit dem Aktuator 40 wirksam verbunden insbesondere strömungsverbunden sind. Die erste Druckleitung 78a ist mit dem ersten Zylinderbereichs 80a verbunden und die zweite Druckleitung 78b mit dem zweiten Zylinderbereichs 80b verbunden. Durch Beaufschlagung der ersten Druckleitung 78a mit Druck kann der erste Zylinderbereich 80a mit Druck beaufschlagt werden und der Kolben 82 kann in eine eingefahrene Stellung gebracht werden. Durch Beaufschlagung der zweiten Druckleitung 78b mit Druck kann der zweiten Zylinderbereich 80b mit Druck beaufschlagt werden und der Kolben 82 kann in eine ausgefahrene Stellung gebracht werden. Weiterhin kann die Steuereinheit 52 elektrisch mit einer Eingabe- und Anzeigeeinrichtung 54 verbunden sein. Die Eingabe- und Anzeigeeinrichtung 54 kann sich im Sichtbereich des Bedieners im Zugfahrzeug 22 befinden. Die Eingabe- und Anzeigeeinrichtung 54 kann ISO-konform sein und/oder durch einen Bus mit der Steuereinheit 52 verbunden sein.

Die Rundballenpresse 10 kann eine Beschleunigungseinrichtung 62 zur Beschleunigung der Bewegung des Aktuators 40 vorgesehen umfassen. Die Steuereinheit 52 kann mit der Beschleunigungseinrichtung 62 verbunden sein, wobei die Beschleunigungseinrichtung 62 mittels der Steuereinheit 52 derart verstellbar ist, dass die Beschleunigungseinrichtung 62 den Aktuator 40 am Ende der Öffnungsbewegung der Auswurfklappe 30 in Abhängigkeit vom Signalwert des Sensors 44, 46, 48 beschleunigt, insbesondere die Geschwindigkeit der Bewegung des Aktuators 40 erhöht. Die Steuereinheit 52 kann also betreibbar sein, dass der Aktuator 40 am Ende der Öffnungsbewegung der Auswurfklappe 30 beschleunigt wird. Hierzu kann die Geschwindigkeit des Aktuators 40 erhöht werden, insbesondere von einer ersten auf eine zweite Geschwindigkeit. Die beschleunigte Öffnung der Auswurfklappe 30 am Ende der Öffnungsbewegung, vermeidet oder verringert vorteilhafterweise den Kontakt zwischen dem Rundballen und der Auswurfklappe, sodass eine Beschädigung und/oder ein Abriss des Umhüllungsmaterials vermieden werden kann. Von Vorteil ist dies insbesondere, wenn der Rundballen mit einem leicht zu beschädigenden bzw. "zerbrechlichen" Umhüllungsmaterial wie Plastikfolie oder Netz umwickelt ist und der Rundballen ausgeworfen wird.

Figur 3 zeigt einen ersten schematischen Hydraulikplan zur Steuerung der Auswurfklappe der erfindungsgemässen Rundballenpresse, beispielsweise gemäss Figur 1 und 2. Der in Figur 3 gezeigte erste schematische Hydraulikplan ergänzt die Ausführungen zu den Figuren 1 und 2, sodass im Folgenden lediglich auf Details und/oder Unterschiede eingegangen wird.

Gemäß dem vorliegenden Ausführungsbeispiel ist eine Druckquelle 70 vorgesehen, bei der es sich um eine Hydraulikpumpe des Zugfahrzeugs 22 handeln kann. Die Druckquelle 70 kann in konventioneller Weise mit einem Druckmittelreservoir 72 des Zugfahrzeugs 22 in Verbindung stehen und über ein Steuerventil 74, dass hier als elektromagnetisch betätigbares 4/3-Wegeventil mit vier Anschlüsse 74.1, 74.2, 74.3 und 74.4 ausgeführt ist, einen Hydraulikdruck für an das Zugfahrzeug 22 anschließbare Anbaugeräte, wie beispielsweise der hier beschriebenen Ballenpresse 10. Darüber hinaus ist in ebenfalls bekannter Weise ein Überdruckventil 76 vorgesehen, das öffnet, sollte im Hydraulikkreis ein Druck anstehen, der einen vergebenen Höchstdruck übersteigt.

Die erste und zweite Druckleitung 78a, 78b sind derart ausgebildet sind, dass sie direkt oder indirekt an das Steuerventil 74 des Zugfahrzeugs 22 anschließbar sind. Das Zugfahrzeugs 22 steht dabei derart mit der Druckquelle 70 in Verbindung steht, dass es entweder die erste oder die zweite Druckleitung 78a, 78b mit Druck beaufschlagen oder eine Sperrstellung B einnehmen kann, in der keine der Druckleitungen 78a, 78b mit Druck beaufschlagt wird.

Zur Betätigung der Auswurfklappe 30, insbesondere schwenkbaren Auswurfklappe 30, sind an der Ballenpresse zwei Aktuatoren 40, insbesondere zwei gemeinsam ansteuerbare Aktuatoren 40 vorgesehen, die jeder erste Anschlüsse 40.1 und zweite Anschlüsse 40.2 aufweisen. Es ist aber auch denkbar, dass nur ein Aktuator 40 vorgesehen ist.

Das Steuerventil 74 kann wahlweise eine Stellung A, B oder C einnehmen. In der ersten Stellung A wird die Druckleitung 78a über die Anschlüsse 74.1 und 74.3 mit Druck beaufschlagt wird. Nimmt das Steuerventil 74 seine dritte Stellung C ein, so wird die zweite Druckleitung 78b über die Anschlüsse 74.1 und 74.4 mit Druck beaufschlagt. Nimmt das Steuerventil 74 seine mittlere Stellung, also seine Sperrstellung B, wird ein Hydraulikfluss unterbunden oder mittels einer Rückführleitung 72.1 in das Druckmittelreservoir 72 rückgeführt. In der Sperrstellung B wird keine der Druckleitungen 78a, 78b mit Druck beaufschlagt.
Weiter ist die Beschleunigungseinrichtung 62 vorgesehen, die zumindest einen Speicher 90 und ein Beschleunigerventil 92 umfasst. Der Speicher 90 kann ein Speicher 90 für ein Fluid sein, beispielsweise Hydraulikfluid. Das Beschleunigerventil 92 ist als 2/2-Wegeventil ausgebildet und weist zwei Anschlüsse 92.1, 92.2 auf. Ausserdem kann das Beschleunigerventil 92 elektromagnetisch betätigbar ausgebildet sein. Das Beschleunigerventil 92 kann zwei Stellungen einnehmen, eine Durchlassstellung D und eine Sperrstellung E. In der Durchlassstellung D weist das Beschleunigerventil 92 einen Durchflussweg auf, der insbesondere in beide Richtungen durchlässig ist. In der Sperrstellung E weist das Beschleunigerventil 92 ein Rückschlagventil auf, das nur in eine Richtung und unter Druck durchlässig ist.

Das Beschleunigerventil 92 und der Speicher 90 sind mit der zweiten Druckleitung 78b wirksam verbunden. Das Beschleunigerventil 92 ist mit dem Speicher 90 wirksam verbunden. Das Beschleunigerventil 92 ist in Reihe mit dem Speicher 90 und dem Aktuator 40 angeordnet, und insbesondere dem Speicher in Strömungsrichtung nachgeordnet und dem Aktor in Strömungsrichtung vorgeordnet. Das Beschleunigerventil 92 und der Speicher 90 können also in Reihe entlang der zweiten Druckleitung 78b zwischen dem Anschluss 74.4 des Steuerventils und dem Anschluss 40.1 des Aktuators 40 angeordnet sein. Ausserdem ist ein Blendenventil parallel zum Beschleunigerventil mit der zweiten Druckleitung 78b wirksam verbunden.

In der Durchlassstellung D verbindet das Beschleunigerventil 92 die zweite Druckleitung 78b vom Anschluss des Steuerventils 74.4 über seine Anschlüsse 92.1 und 92.2 mit dem oder den ersten Anschlüsse 40.1 des Aktuators. Dabei kann, wenn die zweiten Druckleitung 78b mit Druck beaufschlagt wird, ein Fluid entlang der zweiten Druckleitung 78b von der Druckquelle 80 und zusätzlich, zur Beschleunigung der Öffnungsbewegung der Auswurfklappe, auch vom Speicher 90 zu den ersten Anschlüsse 40.1 des Aktuators und somit in den zweiten Zylinderbereich 80b strömen.

In der Sperrstellung E verbindet das Beschleunigerventil 92 ebenfalls die zweite Druckleitung 78b über seine Anschlüsse 92.1 und 92.2 mit dem oder den ersten Anschlüsse 40.1 des Aktuators. Allerdings kann das Fluid in der Speerstellung E nur wie folgt strömen. Wenn die zweite Druckleitung 78b mit Druck beaufschlagt ist, kann Fluid nur entlang der zweiten Druckleitung 78b von der Druckquelle 70 zum Speicher 90 und über das Blendenventil zu den ersten Anschlüsse 40.1 des Aktuators und somit in den zweiten Zylinderbereich 80b strömen, da das Rückschlagventil in diese Strömungsrichtung einen Fluss blockiert. Wenn die erste Druckleitung 78a mit Druck beaufschlagt ist, kann das Fluid entlang der zweiten Druckleitung 78b vom zweiten Zylinderbereich 80b über die ersten Anschlüsse 40.1 des Aktuators zum Rückschlagventil, dann zum Steuerventil 74 in Stellung A und dann zur Druckquelle 70 strömen, da das Rückschlagventil in diese Strömungsrichtung einen Fluss zulässt.

Darüber hinaus ist eine Steuereinheit 52 zur Steuerung und/oder Regelung einzelner oder mehrerer Funktionen bzw. Abläufe der Ballenpresse 10 vorgesehen, über die das Steuerventil 74 und/oder das Beschleunigerventil 92 und/oder der Speicher 90 angesteuert werden kann. Die Steuerungseinheit 52 kann mit einer Betätigungseinrichtung 54 zur Aktivierung bzw. Deaktivierung eines Automatikmodus der Auswurfklappe 30 wirksam verbunden sein.

Figur 4 zeigt einen zweiten schematischen Hydraulikplan zur Steuerung der Auswurfklappe der erfindungsgemässen Rundballenpresse, beispielsweise gemäss Figur 1 und 2. Der in Figur 4 gezeigte schematische zweite Hydraulikplan entspricht im Wesentlichen dem in Figur 3 gezeigten ersten Hydraulikplan, sodass im Folgenden lediglich auf Details und/oder Unterschiede eingegangen wird.

Das Beschleunigerventil 92 und der Speicher 90 sind mit der ersten und der zweiten Druckleitung 78a, 78b wirksam verbunden. Das Beschleunigerventil 92 ist zwischen dem Speicher 90 und dem Aktuator angeordnet. Das Beschleunigerventil 92 ist mit dem Speicher 90 in Reihe angeordnet, insbesondere wirksam in Reihe strömungsverbunden, und das Beschleunigerventil 92 ist dem Speicher 90 nachgeordnet. Darüber hinaus sind Speicher 90 und Beschleunigerventil 92 parallel zum Steuerventil 74 angeordnet, insbesondere parallel wirksam strömungsverbunden. Im Speziellen ist der Speicher 90 mit einer Anschlussleitung 72.2 zwischen der Druckquelle 70 und dem Anschluss 74.1 wirksam verbunden. Zwischen dem Speicher 90 und der Anschlussleitung 72.2 sind ein weiteres Rückschlagventil 94, insbesondere ein weiteres federbelastetes Rückschlagventil, und zwischen dem weiteren Rückschlagventil 94 und dem Speicher 90 ein Druckmessmittel 96 angeordnet. Das Beschleunigerventil 92 ist mit dem Anschluss 92.2 an die zweite Druckleitung 78b angeschlossen, und insbesondere mit dieser wirksam verbunden. Nimmt das Steuerventil 74 seine Sperrstellung B, wird ein Hydraulikfluss über ein Sperrventil 98 in seiner Durchlassstellung F mittels der Rückführleitung 72.1 in das Druckmittelreservoir 72 rückgeführt. Das Sperrventil 98 ist ein 2/2 Wegeventil. In einer Sperrstellung G des Sperrventils 98 wird der Speicher 90 von der Druckquelle 70 über die Anschlussleitung 72.2 befüllt.

In der Durchlassstellung D kann der Speicher 90 mittels des Beschleunigerventils 92 über seine Anschlüsse 92.1 und 92.2 mit dem oder den ersten Anschlüsse 40.1 des Aktuators verbunden werden. Wenn das Steuerventil in der Stellung C ist, kann dann die Druckquelle 70 mittels der Anschlüsse 74.1 und 74.4 die zweite Druckleitung 78b mit Druck beaufschlagen, sodass Fluid zum ersten Anschluss 40.1 des Aktuators 40 und somit in den zweiten Zylinderbereich 80b strömen kann, und gleichzeitig kann, am Ende der Öffnungsbewegung, wenn das Beschleunigerventil 92 in die Durchlassstellung D geschaltet wird, der Speicher 90 die zweite Druckleitung 78b zusätzlich mit Druck beaufschlagen und zusätzlich, zur Beschleunigung der Öffnungsbewegung der Auswurfklappe 30, auch vom Speicher 90 zum ersten Anschluss 40.1 des Aktuators 40 und somit in den zweiten Zylinderbereich 80b strömen.

In der Sperrstellung E verbindet das Beschleunigerventil 92 ebenfalls den Speicher 90 über seine Anschlüsse 92.1 und 92.2 mit der zweiten Druckleitung, insbesondere mit dem oder den ersten Anschlüsse 40.1 des Aktuators. Allerdings kann ein Fluid in der Sperrstellung E nur wie folgt strömen. Wenn die zweite Druckleitung 78b mit Druck beaufschlagt ist (Stellung C des Steuerventils 74), strömt Fluid nur entlang der zweiten Druckleitung 78b von der Druckquelle 80 zu dem oder den Anschlüssen 40.1 des Aktuators 40 und somit in den zweiten Zylinderbereich 80b. Wenn die erste Druckleitung 78a mit Druck beaufschlagt ist (Stellung A des Steuerventils 74), kann das Fluid nur entlang der zweiten Druckleitung 78b vom zweiten Zylinderbereich 80b über die ersten Anschlüsse 40.1 des Aktuators durch die zweite Druckleitung 78b zum Druckmittelreservoirs 72 strömen.

Im Folgenden soll nun genauer auf die Funktionsweise der Ballenpresse 10 eingegangen werden, welche für die Figuren 1 bis 4 gilt. Beim Aufnehmen von Erntegut, z. b. Heu oder Stroh, entsteht im Ballenpressraum 26 ein Rundballen 12 wachsender Größe. Die Auswurfklappe 30 befindet sich in der Schließposition, wobei zwei Kammern, also der erste und zweite Zylinderbereich 80a, 80b des Aktuators 40 drucklos gehalten werden. Die Auswurfklappe 30 kann insbesondere auch durch ihr eigenes Gewicht gehalten werden. Um eine gewünschte Packungsdichte des Rundballens 12 zu erhalten, könnte man in der Ballenbildungsphase auch den ersten Zylinderbereich 80a des Aktuators 40 mit einem bestimmten Druck beaufschlagen, um die Auswurfklappe 30 mit einer größeren Vorspannkraft zu beaufschlagen. Der Druck im ersten Zylinderbereich 80a des Aktuators 40 des Aktuators 30 kann beispielsweise automatisch mittels der Steuereinheit 52 einstellbar und/oder vorgebbar sein oder durch den Bediener über die Eingabe- und Anzeigeeinrichtung 54 eingegeben und über die Steuereinheit 52 und das Steuerventil 74 gesteuert werden. Die Signale der Sensoren 44, 46, 48 an beiden Seiten der Rundballenpresse 10 können auf unterschiedliche Öffnungswinkel 60 an beiden Seiten der Auswurfklappe 30 hinweisen, was auf einen ungleichmäßigen Ballen hindeutet, kann dies dem Bediener auf der Eingabe- und Anzeigeeinrichtung 54 signalisiert werden. Er kann dann im weiteren Arbeitsverlauf entsprechend gegenlenken, damit das Erntegut möglichst mittig in die Aufnahmevorrichtung 24 einläuft.

Sobald der Rundballen 12 eine gewisse Größe erreicht hat, kann der Bediener einen Hinweis erhalten oder die Steuereinheit 52 ein Auswurfsignal. Beispielsweise kann, sobald sich die Auswurfklappe 30 bewegt, die Steuereinheit 52 ein entsprechendes Auswurfsignal von dem oder den Sensoren 44, 46, 48 erhalten. Dieses Auswurfsignal kann als Hinweis, dass der Rundballen 12 fertiggestellt ist, aufgefasst werden. Im Speziellen kann der Rundballen 12 die an der Innenseite der Auswurfklappe 30 gelagerten Pressmittel, insbesondere die Pressrollen 34 nach hinten und oben drücken. Übersteigt die zugehörige Kraft die Gewichtskraft der Auswurfklappe 30, fängt letztere an, um die Achse 28 aufzuschwenken. Über die Eingabe- und Anzeigeeinrichtung 54 kann eine entsprechende Information an den Bediener gegeben werden. Der Bediener kann dann die Fahrt unterbrechen. Mit einer in der Zeichnung nicht dargestellten Umhüllungseinrichtung kann im Anschluss der Rundballen 24 mit einem Umhüllungsmaterial, beispielsweise Band, Netz oder einer Folie, umwickelt werden. Danach kann der Rundballens 12 auf den Boden ausgeworfen oder an eine nicht dargestellte Wickelvorrichtung übergeben werden. Dazu ist die Auswurfklappe 30 in die Öffnungsposition zu verbringen. Die Öffnung der Auswurfklappe 30 erfolgt durch den Aktuator 40, gesteuert durch die Steuereinheit 52 und das Steuerventil 48. Der oder die Sensoren 44, 46, 48 können der Steuereinheit 52 Rückkopplungsinformationen über die Position der Auswurfklappe 30 entlang ihres Wegs zwischen der Schließposition und der Öffnungsposition zur Verfügung stellen.

Der Öffnungsvorgang kann somit basierend auf den Positionsinformationen des oder der Sensoren 44, 46, 48 derart erfolgen, dass die Steuereinheit 52 derart betreibbar ist - beispielsweise basierend auf einer softwaremäßig abgelegten Tabelle -, dass das Ende einer Öffnungsbewegung der Auswurfklappe 30 schneller als die übrige Öffnungsbewegung erfolgt. Der Aktuator 40 kann mittels der Steuereinheit 52 derart verstellbar sein, insbesondere einstellbar und/oder betreibbar sein, das die Geschwindigkeit des Aktuators 40 abhängig vom Signalwert des Sensors 44, 46, 48, also der Position, in der Weise einstellbar ist, dass sich der Aktuator 40 mit einer ersten Geschwindigkeit bewegt oder bewegbar ist, wenn der Signalwert unterhalb eines vorgebbaren Positionsschwellwerts liegt, und sich der Aktuator 40 mit einer zweiten Geschwindigkeit bewegt oder bewegbar ist, wenn der Signalwert gleich oder oberhalb des vorgebbaren Positionsschwellwerts liegt. Die Erhöhung der Geschwindigkeit der Auswurfklappe 30 ermöglicht es vorteilhafterweise einen ausreichend großen Abstand zwischen Auswurfklappe 30 und dem Rundballen 12 einzuhalten, um jegliche Beschädigung der Rundballens 12 oder eines Umhüllungsmaterials um den Rundballen 12 zu vermeiden.

Nach dem Auswerfen des Rundballens 12 wird die Auswurfklappe 30 in analoger Weise wieder geschlossen. Die Erfassung der Position der Auswurfklappe 30 durch die Sensoren 44, 46, 48 ermöglicht im Ergebnis eine verbesserte Kontrolle nicht nur der Auswurfklappe 30 sondern der Rundballenpresse 10 insgesamt.

Die Ballenpresse 10 kann in einem manuellen und einem automatischen Modus betrieben werden, der insbesondere von einer Bedienungsperson über die vorzugsweise in einer Kabine des Zugfahrzeugs 22 angeordneten Betätigungseinrichtung (nicht dargestellt) ausgewählt werden kann.

Im manuellen und automatischen Modus wird zum Öffnen der Auswurfklappe 30 das Steuerventil 74 in bekannter Art und Weise angesteuert und nimmt seine Stellung C ein, in der die Druckleitung 78b mit Druck beaufschlagt wird, wodurch der Anschluss 40.1 des Aktuators 40 mit Druck beaufschlagt und der Kolben 82 bezogen auf den Zylinder 80 ausgefahren wird, um die Auswurfklappe 30 zu öffnen. Sich in den nun nicht mit Druck beaufschlagten Bereichen 80a der Zylinder 50 befindendes Druckmittel kann über die Anschlüsse 40.2 in Richtung des Druckmittelreservoirs 72 abfließen.

Um die Auswurfklappe 30 zu schließen, wird das Steuerventil 74 derart angesteuert, dass es seine Stellung A einnimmt und die Anschlüsse 40.2 des Aktuators 40 über die Druckleitung 78a mit Druck beaufschlagt werden, so dass die Kolben 82 des Aktuators 40 bezogen auf den Zylinder 80 eingefahren wird, um die Auswurfklappe 30 zu schließen. Sich in den nun nicht mit Druck beaufschlagten Bereichen 80b des Zylinders 80 befindendes Druckmittel kann nun in Richtung des Druckmittelreservoirs 72 abfließen.

Im manuellen Modus ist ein Neutralzustand vorgesehen, in dem das Steuerventil 74 seine Sperrstellung B einnimmt. In diesem Neutralzustand wird keine der Druckleitungen 78a, 78b mit Druck beaufschlagt.

Die Rundballenpresse 10 kann auch im automatischen Modus betrieben werden. Der automatische Modus kann beispielsweise durch eine Betätigung des Betätigungsschalters aktiviert werden, in dem das Steuerventil 74 initial den Neutralzustand, also Sperrstellung B einnimmt. Dazu können beispielsweise ein oder zwei Druckmessmittel (nicht dargestellt) einen jeweils in den Druckleitungen 78a bzw. 78b anstehenden Druck ermitteln und diese Information an die Steuereinrichtung 52 übermitteln.

Darüber hinaus können der Steuereinrichtung 52 in bekannter Weise Informationen über den aktuellen Zustand der Rundballenpresse 10 zur Verfügung stehen, insbesondere darüber, ob ein sich in der Rundballenpresse 10 befindlicher Rundballen 12 aus dem Ballenpressraum 26 abgegeben werden soll, beispielsweise da ein Ballenbildungs- bzw. Ballenbindungs- und/oder Ballenumhüllungsprozess abgeschlossen ist. Liegt der Steuereinheit 52 nun die Information vor, dass der Ballen 12 aus dem Ballenpressraum 26 abgeben werden soll, so steuert diese das Steuerventil 74 in Abhängigkeit von einer zwischen den Druckmessmitteln anstehenden Druckdifferenz derart an, dass es in Stellung C bewegt wird und somit an dem Druckmessmittel in der Druckleitung 78b ein höherer Druck ansteht als an dem Druckmessmittel in der Druckleitung 78a. Entsprechend beaufschlagt die Druckquelle 70 die Bereiche 80b der Zylinder 80 mit Druck. Die Kolben 82 fahren nun bezogen auf die Zylinder 80 aus und verschwenken gemäß den gezeigten Ausführungsbeispielen der Figuren 1 bis 2 die Auswurfklappe 30 nach oben. Diese gibt nun die Öffnung 32 frei und der Rundballen 12 kann den Ballenpressraum 26 verlassen.

Liegt der Steuereinheit 52 hingegen die Information vor, dass die Auswurfklappe 30 geschlossen werden soll, so steuert diese das Steuerventil 74 in Abhängigkeit von einer zwischen den Druckmessmitteln anstehenden Druckdifferenz derart an, dass es in Stellung A bewegt wird und somit an dem Druckmessmittel in der Druckleitung 78a ein höherer Druck ansteht als an dem Druckmessmittel in der zweiten Druckleitung 78b. Darüber hinaus kann die Beschleunigungseinrichtung 62 zur Beschleunigung der Bewegung des Aktuators 40, die den Speicher 90 und das Beschleunigerventil 92 umfasst und mit der Steuereinheit 52 verbunden ist, mittels der Steuereinheit 52 derart verstellbar sein, dass die Beschleunigungseinrichtung 62 den Aktuator 40 am Ende der Öffnungsbewegung der Auswurfklappe 30 in Abhängigkeit vom Signalwert des Sensors 44, 46, 48 beschleunigt. Dadurch kann vermieden werden, dass die Auswurfklappe 30 den Rundballen 12 beschädigt.

Soll die Auswurfklappe 30 (wieder) geschlossen werden, da der Rundballen 12 den Ballenpressraum 26 verlassen hat, was beispielsweise durch einen oder mehrere entsprechende Sensoren (beispielsweise nicht gezeigt Druck- oder Auflagesensoren) ermittelt werden kann, die beispielsweise an einer Entladerampe 66 (siehe Figur 1) der Rundballenpresse 10 angeordnet sein können, so steuert die Steuereinheit 52 das Steuerventil 74 in Abhängigkeit von einer zwischen den Druckmessmitteln anstehenden Druckdifferenz derart an, dass es in Stellung A bewegt wird und somit an dem Druckmessmittel in der Druckleitung 78a ein höherer Druck ansteht als an dem Druckmessmittel in der Druckleitung 78b.

Ist ein Betrieb im automatischen Modus nicht länger gewünscht, kann dieser deaktiviert werden, in dem die Bedienungsperson den Betätigungsschalter entsprechend betätigt bzw. in eine entsprechende Stellung bringt.

Es kann darüber hinaus oder auch alternativ vorgesehen, dass die die Rundballenpresse 10 in den manuellen Modus zurückkehrt, wenn das das Steuerventil 74 während eines Betriebs im automatischen Modus, gegebenenfalls auch nur kurzfristig, in seine Sperrstellung B verbracht wird, in der es einen Druckmittelstrom von der Druckquelle 72 zum Aktuator 40 unterbindet. Dies kann insbesondere dann günstig sein, wenn die Ballenpresse 10 in Gelände unterschiedlicher Geländeformen eingesetzt wird, beispielsweise einem Gelände, in dem sich Hügel und flache Geländebereiche abwechseln. Hier, wie auch in einer Notfallsituation, kann es wichtig und/oder hilfreich sein, dass eine Bedienungsperson schnell und/oder kurzfristig die manuelle Kontrolle über ein Abgeben des Ballens aus dem Pressraum bzw. eines Schließens und/oder Öffnen einer Auswurfklappe (zurück-) erlangen kann.

## Patentansprüche

1. Rundballenpresse mit einem Ballenpressraum (26) und
einer Auswurfklappe (30), die entlang eines Weges zwischen einer Schließposition, in der die Auswurfklappe (30) den Ballenpressraum (26) verschliesst, und einer Öffnungsposition beweglich ist, in der ein Rundballen (12) aus dem Ballenpressraum (26) auswerfbar ist,
und mit einem mit einer Steuereinheit (52) verbundenen Sensor (44, 46, 48) zur Bereitstellung einer Information über die Position der Auswurfklappe (30)entlang des Weges, und mit einem mit der Steuereinheit (52) verbundenen Aktuator (40) zum Verstellen der Auswurfklappe (30), wobei die Steuereinheit (52) betreibbar ist, den Aktuator (30) abhängig vom Signalwert des Sensors (44, 46, 48) in der Weise zu verstellen, dass sich der Aktuator (30) mit einer Geschwindigkeit bewegt, die von der jeweiligen Position der Auswurfklappe (30) abhängt,
**dadurch gekennzeichnet, dass**
die Steuereinheit (52) weiter derart betreibbar ist, dass das Ende einer Öffnungsbewegung der Auswurfklappe (30) schneller als die übrige Öffnungsbewegung erfolgt.

2. Rundballenpresse nach Anspruch 1, **dadurch gekennzeichnet, dass** eine Beschleunigungseinrichtung (62) zur Beschleunigung der Bewegung des Aktuators (40) vorgesehen ist, wobei die Steuereinheit (52) mit der Beschleunigungseinrichtung (62) verbunden ist, und die Beschleunigungseinrichtung (62) mittels der Steuereinheit (52) derart verstellbar ist, dass die Beschleunigungseinrichtung (62) den Aktuator (40) am Ende der Öffnungsbewegung der Auswurfklappe (30) in Abhängigkeit vom Signalwert des Sensors (44, 46, 48) beschleunigt.

3. Rundballenpresse nach Anspruch 1 oder 2, **dadurch gekennzeichnet, dass** die Rundballenpresse (10) eine erste und einer zweiten Druckleitung (78a, 78b) umfasst, über die der Aktuator (40) selektiv mit Druck beaufschlagbar ist, und die Beschleunigungseinrichtung (62) einen Speicher (90) und ein Beschleunigerventil (92) umfasst, wobei das wenigstens einen Durchflussweg und ein Rückschlagventil aufweisende Beschleunigerventil (92) mit der zweite Druckleitung wirksam verbunden ist.

4. Rundballenpresse nach mindestens einem der vorherigen Ansprüche, **dadurch gekennzeichnet, dass** die erste und zweite Druckleitung (78a, 78b) derart ausgebildet sind, dass sie direkt oder indirekt an ein Steuerventil (74) eines Zugfahrzeugs (22) anschließbar sind, welches vorzugsweise derart mit einer Druckquelle (70) in Verbindung steht, dass es entweder die erste oder die zweite Druckleitung (78a, 78b) mit Druck beaufschlagen oder eine Sperrstellung (B) einnehmen kann, in der keine der ersten und zweiten Druckleitungen (78a, 78b) mit Druck beaufschlagt wird.

5. Rundballenpresse nach mindestens einem der vorherigen Ansprüche, **dadurch gekennzeichnet, dass** der Aktuator (40) als ein Hydraulikmotor ausgebildet ist, wobei der Hydraulikmotor einen Zylinder (80) und einen in dem Zylinder (80) durch Beaufschlagung mit Druck in eine bezogen auf den Zylinder (80) eingefahrene und eine bezogen auf den Zylinder (80) ausgefahrene Stellung bringbaren Kolben (82) umfasst.

6. Rundballenpresse nach einem der vorherigen Ansprüche, **dadurch gekennzeichnet, dass** das Beschleunigerventil mittels der Steuereinheit (62) ansteuerbar ist.

7. Verfahren zum Betrieb einer Rundballenpresse mit einem Ballenpressraum (26) und Auswurfklappe (30), die entlang eines Weges zwischen einer Schließposition, in der die Auswurfklappe (30) den Ballenpressraum (26) verschliesst, und einer Öffnungsposition bewegt wird, in der ein fertiggestellter Rundballen (12) aus dem Ballenpressraum (26) ausgeworfen wird, und mit einem mit einer Steuereinheit (52) verbundenen Sensor (44, 46, 48) zur Bereitstellung einer Information über die Position der Auswurfklappe (30) entlang des Weges, und mit einem mit der Steuereinheit (52) verbundenen Aktuator (40) zum Verstellen der Auswurfklappe (30), wobei die Steuereinheit (52) derart betrieben wird, den Aktuator (40) abhängig vom Signalwert des Sensors (44, 46, 48) in der Weise zu verstellen, dass der Aktuator (40) mit einer Geschwindigkeit bewegt wird, die von der jeweiligen Position der Auswurfklappe (30) abhängt, **dadurch gekennzeichnet, dass** die Steuereinheit (52) weiter derart betrieben wird, dass das Ende einer Öffnungsbewegung der Auswurfklappe (30) schneller als die übrige Öffnungsbewegung erfolgt.
